# EUROPÄISCHE PATENTSCHRIFT

(11) **EP 0 357 160 B1**
(45) Veröffentlichungstag und Bekanntmachung des Hinweises auf die Patenterteilung: **28.04.1993**
(21) Anmeldenummer: 89250002.6
(22) Anmeldetag: 14.07.1989
(51) Int. Cl.: B01D 53/34

(54) **Verfahren und Vorrichtung zur Behandlung von Gasen**
Process and apparatus for gas treatment
Procédé et dispositif pour le traitement de gaz

(30) Priorität: 19.07.1988 DE 3824880
(43) Veröffentlichungstag der Anmeldung: 07.03.1990
(73) Patentinhaber: Noell GmbH, 97080 Würzburg (DE)
(72) Erfinder: Hurdelbrink, Wolfgang, Dr.-Ing., D-8702 Zell (DE); Stephan, Rainer, Dr.-Ing., D-8755 Alzenau (DE)
(74) Vertreter: Kaiser, Henning

(56) Entgegenhaltungen:
- EP-A- 0 228 111
- WO-A-88/08741
- DE-A- 3 326 935
- US-A- 4 726 940

## Beschreibung

Die Erfindung betrifft ein Verfahren und eine Vorrichtung zur Behandlung von Gasen gemäß den Oberbegriffen der Ansprüche 1 und 8.

Aufgrund ihrer schädigenden Wirkung für die Umwelt müssen insbesondere die sauren Schadgasbestandteile wie Schwefeloxid, Stickoxid und allgemein möglichst alle Nichtmetalloxide aus den Rauchgasen von mit fossilen Brennstoffen betriebenen Feuerungen entfernt werden. Gleiches gilt für Gase aus industriellen Prozessen, sofern entsprechende Nichtmetalloxide oder Halogene beispielsweise HCL oder HF in den Gasen enthalten sind.

Es ist bekannt, zur Bindung und Neutralisation von sauren Gaskomponenten alkalische Reagenzien dem Gas zuzumischen. Dieses Verfahren wird auch zur Herstellung von Düngemitteln in Form von Ammoniumsulfaten und Ammoniumnitraten genutzt. Dort wird bei möglichst tiefen Temperaturen und unter gleichzeitig oxidierenden Bedingungen durch Zumischen von reinem oder mit Luft verdünntem Ammoniakgas eine trockene Reaktion der oben genannten Gasbestandteile mit dem Ammoniakgas erreicht.

Ausgehend von Untersuchungen (Schweigger's J. Chem. Phys.,47, S. 119) der Reaktion von Schwefeldioxid mit Ammoniak und Wasserdampf, wobei eine gelbe und anschließend weiße kondensierfähige Substanz, die Ammoniumsulfat enthielt, entstand, wurden verschiedene Vorschläge zur Nutzung dieser Reaktion gemacht, so beispielsweise (Zeitschrift Anorganische und allgemeine Chemie, 211, S. 257) den festen Salznebel aus Ammoniumsulfit und Ammoniumsulfat in einer elektrischen Staubkammer, in der sich auch Ozon bildet, abzuscheiden. Oberhalb von 40 Grad Celsius verflüchtigte sich das abgeschiedene Salz jedoch wieder als Nebel. Abhilfe sollte hier die Aufoxidation der Sulfite mit Luft und die Rückführung der Luft in die Staubkammer schaffen.

Eine ähnliche Ammoniakreaktion, jedoch mit Stickstoffoxid und Stickstoffdioxid ist bekannt (Zhurnal Prikladnoi Khimii, 1962, 36/1, S. 8), bei der zur Unterstützung der Aerosolbildung ein akustischer Agglomerator benutzt wurde und der Staub an einem Elektrofilter abgeschieden wurde. Bei äquimolarem Stickoxid/Stickstoffdioxid-Verhältnis wurde eine Stickoxidabscheidung von 81 bis 91,4 % festgestellt.
Schließlich wird eine Ammoniak-Simultanreaktion zur Abscheidung von Schwefeloxiden und Stickoxiden vorgeschlagen (DE-PS 29 52 458), bei der mit Ammoniak vermischtes Rauchgas zwischen 50 und 80 Grad Celsius zur Unterstützung der Oxidation- und Aerosolbildung mit Elektronen bestrahlt wird.
Die Nachteile dieser trockenen Verfahren bestehen darin, daß die bei der Gasphasenreaktion gebildeten festen Substanzen ein sehr feines und noch nicht stabiles Aerosol darstellen, dessen Abscheidung an herkömmlichen Filtern, wie Gewebefiltern oder Elektrofiltern, sehr schwierig ist und nur unvollkommen gelingt. Außerdem kommt bei Reaktionstemperaturen um 60 Grad Celsius die Reaktion sehr schnell zum Stillstand, da die Reaktions-Zwischenprodukte, Ammoniumsulfit und Ammoniumnitrit, in diesem Temperaturbereich bereits merklich thermisch dissoziiert und damit nicht ausreichend lang beständig sind, um zu dem stabilen Endprodukten Ammoniumsulfat und Ammoniumnitrat zu oxidieren. Dies hat zur Folge, daß neben den Problemen bei der Filtration, ein erhöhter Ammoniakschlupf und ein relativ schlechter Abscheidegrad für die Schwefeloxide und Stickoxiden festgestellt wird. Selbst bei Zugabe von Ozon oder einer UV- oder Elektronenbestrahlung, die die Aerosolbildung und Oxidationsrate beschleunigen, läßt sich das Trockenverfahren nur unbefriedigend betreiben. Bei den erforderlichen Temperaturen oberhalb der Taupunkttemperaturen von etwa 50 Grad Celsius kann die Gasphasenreaktion nie vollständig sein.

Eine andere Methode zur Erzeugung von Ammoniumsulfaten und Ammoniumnitraten und den zuvor genannten Bedingugngen besteht darin, dem Rauchgas eine wässrige Ammoniaklösung zuzumischen und naß reagieren zu lassen. In der DE-PS 36 23 170 wird dazu vorgeschlagen, daß Rauchgas in einer ersten Absorptionsstufe mit wässriger Ammoniaklösung von den sauren Bestandteilen zu befreien und in einer nachgeschalteten zweiten Absorptionsstufe die Stickstoffoxide mittels vorheriger Ozonzugabe auszuwaschen. Der pH-Wert der Waschlösung der zweiten Stufe liegt zwischen 3,0 und 7,0. Die erzeugte Salzlösung wird hierbei in einem mit Rauchgas betriebenen Einspritzverdampfer eingedampft.
Die Waschlösungen müssen auf die typische Rauchgas-Kühlgrenztemperatur von etwa 55 Grad Celsius ebenfalls aufgeheizt werden. Der weitere Nachteil ist, daß bei diesen Temperaturen die wässrigen Sulfit/Sulfat-Lösungen auch bei höheren Ammoniak-Partialdrücken, entsprechend einem Volumenanteil von etwa 0,1 bis 0,2 %o (Vol.) nicht mehr für Ammoniak aufnahmefähig sind, so daß neben dem hohen Ammoniakschlupf in Verbindung mit dem Restschwefeldioxid-Gehalt eine deutliche Aerosolbildung spätestens bei Austritt aus dem Kamin und Abkühlung auf Atmosphärentemperatur festzustellen ist. Abhilfe schafft nur ein aufwendiges, dem Waschsystem nachgeschaltetes, Aerosolabscheidesystem mit einer mehrstufigen Koaleszier- und Filtereinheit, die dem schwankenden Rauchgasstrom anzupassen ist und einen zusätzlichen Druckverlust erzeugt.
Außerdem ist es energetisch ungünstig, die Endprodukte aus einer wässrigen Salzlösung heraus in einer separaten Verfahrensstufe zu trocknen und somit die Rauchgasreinigung zu verteuern. Zudem müssen die Rauchgase nach der nassen Ammoniakwäsche zur Ableitung durch den Kamin wieder aufgeheizt werden.

Der Erfindung liegt die Aufgabe zugrunde, ein Verfahren und eine Vorrichtung vorzuschlagen, um Schadstoffkomponenten aus Gasen, insbesondere Abgasen oder Rauchgasen trocken zu entfernen und hierbei die den Abscheidegrad begrenzenden, instabilen Sulfite und Nitrite ebenso wie das erzeugte Aerosol zu stabilisieren sowie ein als Düngemittelrohstoff geeignetes Abscheideprodukt zu erzeugen.

Die Aufgabe wird erfindungsgemäß durch die Ansprüche 1 und 8 gelöst. Vorteilhafte Weiterbildungen der Erfindung sind in den Unteransprüchen erfaßt.

Der Vorteil des erfindungsgemäßen Verfahrens liegt darin, daß das Gas nach Temperaturabsenkung auf etwa 30 bis 150 Grad Celsius und gegebenenfalls Anreicherung mit Wasserdampf mit einem inerten oder katalytisch wirkenden gekühlten Feststoffmaterial als Adsorptionsmittel mit großer Oberfläche kurzzeitig in Berührung gebracht wird. Die beispielsweise bei Zugabe von Ammoniak zu einem Schwefeloxide und Stickoxide enthaltenden Gas sich exotherm bildenden Reaktionsvorprodukte Ammoniumsulfit und Ammoniumnitrit lagern sich auf der Oberfläche des Adsorptionsstoffes an und können so nach sehr kurzer Behandlungszeit aus dem Gas entfernt werden. Dabei werden mit Frischluft und gegebenenfalls Wasser die Reaktionswärme, die der Adsorptionsstoff aufgenommen hat, wieder abgeführt, die Reaktionsprodukte stabilisiert, oxidiert und von den Oberflächen der Adsorptionsstoffes abrasiv getrennt. Anschließend kann das gekühlte und vom Reaktionsprodukt getrennte Feststoffmaterial zur erneuten Reaktion dem Gas wieder zugeführt werden.
Durch den Eintrag einer entsprechend großen gekühlten und beweglichen Oberfläche, wie sie der Adsorptionsstoff bietet, in das mit dem alkalischen Reaktionsmittel vorgemischte Gas kommt es aufgrund der natürlichen Oberflächenadsorption und Anreicherung, insbesondere der größeren Moleküle von beispielsweise Wasser, Schwefeldioxid, Stickoxiden und Ammoniak zu einer sehr schnellen Reaktion und damit zu stabilen Reaktions-Vorprodukten.

Da ein Feststoff eine 100 bis 1000 mal größere Wärmeleitfähigkeit als das zu behandelnde Gas besitzt, bleibt, eine entsprechende Wärmekapazität des Feststoffes vorausgesetzt, für die im Sekundenbereich liegende Aufenthaltsdauer des kälteren Feststoffes im wärmeren Gas während des Durchlaufs durch den Reaktor ein Temperaturgefälle vom Gas zur mit dem Reaktions-Vorprodukt belegten Feststoffoberfläche erhalten. Dies ist überhaupt die Voraussetzung dafür, daß sich die in der Gasphase nicht beständigen Sulfite und Nitrite beziehungsweise sonstigen Salze zu einem den Abscheidegrad von Schwefeldioxid und Stickoxiden sowie den sonstigen Nichtmetalloxiden bestimmenden wesentlichen Anteil auf der Feststoffoberfläche bilden können. Aufgrund der schlechten Wärmeleitfähigkeit des Gases und der guten des Feststoffes ist es beispielsweise möglich, für die Zeitdauer von etwa 1 bis 5 Sekunden einen Temperaturgradienten von 10 bis 30 Grad aufrechtzuerhalten, ohne das Gas tiefer als beispielsweise 70 Grad Celsius abkühlen zu müssen. In dieser kurzen Zeit läßt sich jedoch die Reaktion mit der in der Größenordnung von etwa 100 000 Liter pro Molsekunde betragenden Geschwindigkeitskonstanten weitgehend abschließen. Im Gegensatz zu dem in der Gasphase instabilen, feindispersen Reaktionsaerosol, das neben den nur zum Teil gebildeten stabilen Partikeln, beispielsweise Sulfat- und Nitratpartikeln, noch große Anteile thermisch dissoziierter Salze, hier beispielsweise Sulfite und Nitrite, als sublimierfähige Substanz enthält, ist bei dem hiervorgeschlagenen Verfahren das auf der gekühlten Feststoffoberfläche abreagierte Reaktions-Vorprodukt weitaus beständiger. Es kann ohne einen erneuten thermischen Zerfall zur weiteren Oxidation und Stabilisierung aus dem Gas entfernt werden. Im Gas verbleibt hier nur der stabile Aerosolanteil, der aus natürlichem Abrieb von Adsorptionsstoffen oder bereits gebildeten stabilen Salzpartikeln besteht und mit herkömmlichen Gewebe- oder Elektrofiltern filtrierbar ist.

Überraschenderweise wurde festgestellt, daß die auf der gekühlten Oberfläche niedergeschlagenen und nach den Verfahren gemäß dem Stand der Technik bei einer Temperatur von 60 bis 70 Grad Celsius eigentlich instabilen Reaktions-Vorprodukte für die Zeitdauer ihres Verweilens im Reaktor weitgehend stabil bleiben. Infolge der Temperaturträgheit der Oberfläche der einzusetzenden Adsorptionsstoffe ist die Zersetzungsgeschwindigkeit wesentlich niedriger als die Erzeugungsrate des Reaktions-Vorproduktes, so daß die niedergeschlagenen Salze gegenüber der zersetzenden Wirkung der höheren Gastemperatur ein typisches Hystereseverhalten aufweisen, das mit der hier vorgeschlagenen Erfindung ausgenutzt wird. Der Vorteil des Verfahrens ist es also auch, daß trotz relativ hoher Temperaturen, die man für die direkte Ableitung in den Kamin benötigt, es gelungen ist, zersetzliche und instabile Reaktions-Vorprodukte zu erzeugen und solange stabil zu halten, bis sie aus dem für sie schädlichen Temperaturbereich entfernt werden können. Hierbei bleibt das Gas trocken und muß für die Ableitung über den Kamin nicht aufgeheizt werden.

Eine sehr große Oberfläche bei geringer Materialmenge läßt sich durch Adsorptionsstoffe in Form von kleinen Körnern mit 0,1 bis 5 mm Durchmesser, vorzugsweise jedoch von 1 bis 3 mm Kantenlänge oder Durchmesser erreichen. Als Kornmaterial lassen sich vorteilhaft gemahlene Hochofenschlacke, Kohleschlacke aus Kraftwerken, gemahlenes natürliches Gestein, wie Quarz, Basalt, Aluminiumoxide aber auch keramische Stoffe, die zuvor gebrannt wurden sowie Kunststoffgranulate aus den Kunststoffen Polypropylen, Polyethylen oder ähnlichen einsetzen. Besonders vorteilhaft lassen sich so auch zermahlene Altreifen wiederverwerten. In bestimmten Fällen hat sich auch Kohlenstoff, beispielsweise in Form von Graphit, bewährt. An Stelle von Körnern kann auch ein endloses Band in Scheibenform oder als Gliederband registerähnlich durch den Reaktor geführt werden, wobei nur stets ein Teil des Registers mit dem Gas in Kontakt tritt, während der andere Teil des Registers außerhalb des Reaktors durch eine Abrasion oder chemische Lösungsmittel wieder regeneriert wird, bevor es erneut im Reaktor dem Gasstrom ausgesetzt wird. Derartige Register können eine stark zerklüftete Oberfläche aus Metallen, Metalloxiden, keramischen Stoffen oder Kunststoff aufweisen.

Um den Verschleiß des Adsorptionsstoffes und damit die nachzufüllenden Körnermenge gering zu halten beziehungsweise den Austausch der Registeroberfläche möglichst zu vermeiden und zudem die Filteranlagen möglichst wenig säubern zu müssen ist es vorteilhaft, wenn die Oberfläche des als Adsorptionsstoff eingesetzten Materials härter ist als die Oberfläche der Reaktionsprodukte.

Eine wirksame Verfahrensweise im Reaktor läßt sich insbesondere dann erreichen, wenn der Adsorptionsstoff und das zu behandelnde Gas im Gegenstrom geführt werden. Bauartbedingt wird man in manchen Fällen auch eine Relativbewegung zwischen dem Feststoffmaterial und dem zu behandelnden Gas erzielen müssen, indem man die Gase im kombinierten Kreuz-Gegenstrom zu den Feststoffen führt.

Sollte aufgrund der Gaszusammensetzung oder einer baulichen Einschränkung die Notwendigkeit bestehen, den Reaktionsprozeß sehr schnell durchzuführen, können dem Gas auch Reaktionsbeschleuniger zugeführt werden. Dies ist auf mehrfache Art und Weise möglich: Zum einen können dem Reaktor auf einer oder mehreren Reaktorebenen Oxidationsmittel, wie beispielsweise Frischluft, Ozon, Wasserstoffsuperoxid, Stickstoffdioxid oder Mischungen dieser Oxidationsmittel mit möglichst gleicher oder tieferer Temperatur als die Temperatur des zu behandelnden Gases zugeführt werden. Andererseits ist es selbstverständlich auch möglich,-das Gas zusätzlich zu bestrahlen, um den Prozeß noch weiter zu beschleunigen. Dabei bietet das vorliegende erfindungsgemäße Verfahren die Möglichkeit, mit wesentlich geringeren Strahlleistungen auszukommen, so daß alle technisch denkbaren Strahler, wie Elektronenstrahler, UV-Strahler, Mikrowellenstrahler oder Gammastrahler eingesetzt werden können. Dabei ist es gleichgültig für das erfindungsgemäße Verfahren, ob diese Strahler vor, während oder nach der Reaktion im Reaktor das zu beahndelnde Gas bestrahlen.

Die erfindungsgemäße Vorrichtung unterscheidet sich von üblichen Gasbehandlungsanlagen, wie sie für Abgase oder Rauchgase aus Feuerungen oder Industriegase sonstiger Art eingesetzt werden, insoweit, als für das zu behandelnde Gas Kreislauffördereinrichtungen, bestehend aus Rohrleitungen, Pumpen, Dosier- und Zugabeeinrichtungen oder Leiteinrichtungen für den Adsorptionsstoff und eine eben solche Kreislauffördereinrichtung für das nach dem Abtrennen der Reaktionsprodukte von dem Adsorptionsstoff aus dem Kühlgas entstehende Arbeitsgas, welches dem Reaktor zusammen mit dem zu behandelnden Gas wieder zugeführt werden soll, vorgesehen sind. Weiterhin wird eine Scheidevorrichtung für den Adsorptionsstoff, das zugeführte Kühlgas und die Reaktionsvorprodukte eingesetzt und schließlich eine Abscheidevorrichtung für die Reaktionsprodukte, wie beispielsweise Ammoniumsulfate, Ammoniumnitrate und sonstige als Düngervorprodukte verwendbare Feststoffe.

In einer besonderen Ausführungsform kann diese Behandlungseinrichtung für den körnigen Feststoff aus einem Drehrohr bestehen, in dem die Feststoffkörner mit Luft und/oder Wasser beziehungsweise dem Kühlgas behandelt werden.

Anhand einer schematischen Blockschaltskizze soll die Erfindung in einem Ausführungsbeispiel näher erläutert werden.

Aus einem nicht dargestellten Vorentstauber gelangt Rauchgas A mit etwa 150 Grad Celsius Temperatur zu einem Vorkühler 1, der aus einem Wärmetauscher oder einem Einspritzkühler bestehen kann und das Gas auf etwa 50 bis 100 Grad Celsius herunterkühlt. Vor Erreichen des Reaktors wird dem Gas ein alkalisches Reagenz z.B. Ammoniakgas oder auch feste und flüssige Reaktanden C zugemischt und ein Kreislaufgas K vom Abscheider 7 in die Rohrleitung 9 eingespeist. Im Reaktor 2 kommt das zu behandelnde Gas mit dem Feststoff aus der Speiseleitung C im Gegenstrom in Kontakt. Während das Gas aufsteigt, wird durch diese Gegenstromfahrweise die Temperaturdifferenz zwischen dem Gas und dem Feststoff beispielsweise Quarzsand weitgehend konstant gehalten. Zur Verbesserung des Verfahrens und zur Verkürzung der Durchlaufzeit im Reaktor oder Erhöhung des Durchsatzes im Reaktor kann auf mehreren Ebenen dem Reaktor ein Oxidationsmittel z. B. kalte Frischluft G zugemischt werden. Nach der Behandlung im Reaktor 2 wird das vorgereinigte und von den kondensier- und sublimierfähigen Dämpfen befreite Gas einem Staubfilter 3 zugeführt, wo die mitgeführten Feststoffteilchen entfernt werden. Anschließend wird das behandelte Gas von einem Gebläse 4 angesaugt und durch den nicht dargestellten Kamin B abgeleitet. Das Feststoff-Granulat bleibt in dem Kreislauf 0 und wird nach dem Durchströmen des Reaktors 2 in einen Kühler 5 geführt, in dem die gesamte im Reaktor 2 aufgenommene Wärme (Reaktionswärme, Sublimations- und Kondensationswärme und übergeleitete Wärme infolge des Temperaturgradienten) abgeführt wird. Dies erreicht man durch Zumischen von Frischluft E und/oder Wasser D. Danach wird der abgekühlte Quarzsand in die Trennstufe 6 geführt, wo durch intensive Korn-an-Korn-Reibung das trockene Reaktions-Vorprodukt in einem Strom aus Frischluft E aufoxidiert und vom Granulat abgetrennt wird. Das gereinigte Granulat wird dann durch einen Förderer 8 dem Reaktor 2 wieder zugeführt.

Das vom Sand getrennte und weitgehend aufoxidierte Reaktionsprodukt verläßt staubförmig den Kühler 5 und die Trennstufe 6 und wird durch den als Arbeitsgas K fortgeführten Luftstrom E zu einer Filterstufe 7 geleitet. Dort wird das pulverförmige Reaktionsprodukt F vom Arbeitsgas K getrennt, welches dann wieder über Rohrleitung 9 dem Reaktor 2 zugeführt wird. Das Reaktionsprodukt F kann anschließend auf herkömmliche Weise für den Abtransport und die Anwendung als Düngemittel konfektioniert werden.

Der Kühler 5 und die Trennstufe 6 können anstatt in einem zweistufigen System auch in einem einzigen Aggregat zusammengefaßt werden. Beispielsweise kann ein Drehrohr verwendet werden, in dem der Quarzsand durch Drehen des Rohres mechanisch gereinigt wird und gleichzeitig frische Luft E kühlend auf den Adsorptionsstoff einwirkt. Zusätzlich könnte das Drehrohr von außen direkt oder indirekt gekühlt werden.

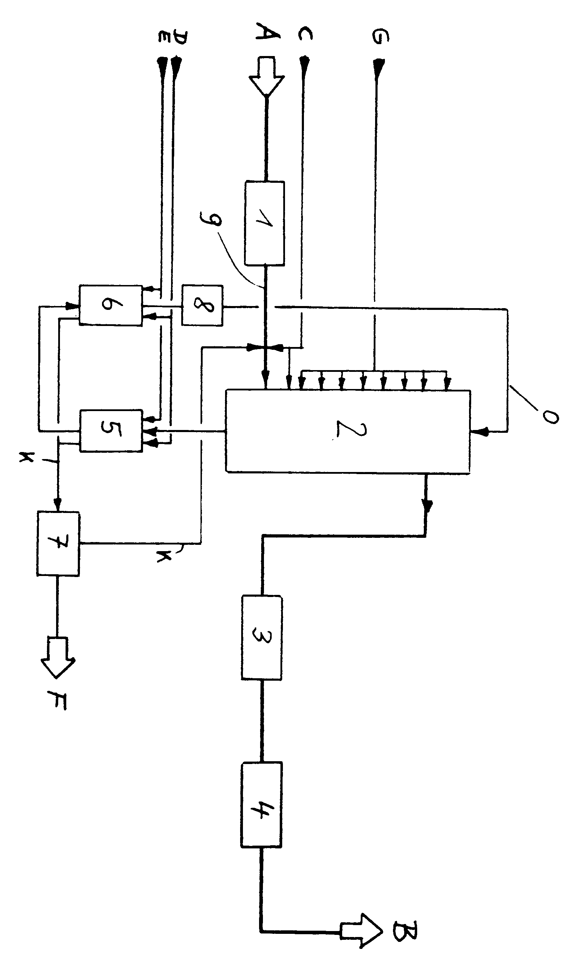

## Patentansprüche

1. Verfahren zur Behandlung von Gasen, die Nichtmetalloxide und/oder Halogenwasserstoffe enthalten unter Anwendung der folgenden Verfahrensmaßnahmen:
a) Abkühlen des zu behandelnden Gases (A) und Einstellung eines absoluten Feuchtegehalts auf etwa 3 bis 30 Vol.%
b) Zumischen eines Arbeitsgases (K) und eines alkalischen Reaktionsmittels (C) zu dem zu behandelnden Gas (A)
c) Leiten des Gemisches aus dem Gas (A), dem Arbeitsgas (K) und dem Reaktionsmittel (C) in einem Reaktor (2) über eine große gekühlte Oberfläche eines durch den Reaktor im Kreislauf bewegten festen Adsorptionsstoffes, dessen Temperatur niedriger als die Temperatur des den Adsorptionsstoff augenblicklich umströmenden Gasgemisches gehalten wird, wobei sich Schadstoffkomponenten oder deren Reaktions-Vorprodukte an dem relativ kalten Adsorptionsstoff anlagern, dabei abkühlen und teilweise stabilisiert werden,
d) Ableiten des Gasgemisches, aus dem die am Adsorptionsstoff angelagerten Schadstoffkomponenten entfernt sind, aus dem Reaktor über einen Filter zum Abscheiden von Feststoffpartikeln,
e) Abkühlen des Adsorptionsstoffes unter weiterer Stabilisierung der angelagerten Reaktionsprodukte durch Kontakt mit Kühlgas (E) und/oder Wasser (D) auf mindestens unter 70 °C nach Entfernen des beladenen trockenen Adsorptionsstoffes aus dem Reaktor,
f) Ablösen der angelagerten Reaktionsprodukte von dem Adsorptionsstoff durch Aufoxidation und/oder mechanischen Abrieb,
g) Abtrennen des Adsorptionsstoffes von dem während der Verfahrensschritte e und f entstandenen Gemisches und Rückführung in den Reaktor,
h) Abscheiden des Reaktionsproduktes (F) und des Abriebes von dem Adsorptionsstoff aus dem als Kühlgas (E) zugeführten Luftstrom und dessen Verwendung als Arbeitsgas (K) gemäß Verfahrensschritt b.

2. Verfahren nach Anspruch 1 dadurch gekennzeichnet, daß der Adsorptionsstoff aus Körnern mit einer Korngröße von 0,1 bis 5 mm, vorzugsweise 1 bis 3 mm besteht.

3. Verfahren nach Anspruch 1 dadurch gekennzeichnet, daß als Adsorptionsstoff Teile einer Oberfläche eines endlosen Bandregisters oder eines Scheibenregisters eingesetzt werden.

4. Verfahren nach einem der Ansprüche 1 bis 3 dadurch gekennzeichnet, daß als Adsorptionsstoff eines oder mehrere der Materialien aus der Gruppe Metalle, Metalloxide, natürliches Gestein, Schlacke aus der Stahlerzeugung, Schlacke aus der Kohleverbrennung, keramische Stoffe, Graphit oder Kunststoff eingesetzt werden.

5. Verfahren nach einem der Ansprüche 1 bis 4 dadurch gekennzeichnet, daß der Adsorptionsstoff eine härtere Oberfläche aufweist als die Oberfläche der Reaktionsprodukte (F).

6. Verfahren nach einem der Ansprüche 1 bis 5 dadurch gekennzeichnet, daß das Gas (A) im Reaktor (2) im Gegenstrom oder Kreuzstrom oder einer Kombination von beiden mit dem Adsorptionsstoff geführt wird.

7. Verfahren nach einem der Ansprüche 1 bis 6 dadurch gekennzeichnet, daß dem Gas (A) Reaktionsbeschleuniger (G) wie Oxidationsmittel und/oder energiereiche Strahlen zugeführt werden.

8. Vorrichtung zur Durchführung des Verfahrens nach einem oder mehreren der Ansprüche 1 bis 7 mit einem Reaktor (2) zur Behandlung von Gasen, der Zugabe- und Ableitvorrichtungen für das Gas und einen Adsorptionsstoff sowie gegebenenfalls eine Zugabeeinrichtung für Reaktionsbeschleuniger aufweist, wobei in der Gaszuleitung (9) ein Vorkühler (1) und eine Zugabeeinrichtung für ein alkalisches Reaktionsmittel vorgesehen sind, einem dem Reaktor nachgeschalteten Filter (3) für das behandelte Gas und einem Kühler (5) für den Adsorptionsstoff,
gekennzeichnet durch
- eine dem Kühler (5) nachgeschaltete Scheidevorrichtung (6) für den Adsorptionsstoff und ein im Kühler durch Zugabe eines Kühlgases (E) entstehendes Arbeitsgas (K),
- einen in der die Scheidevorrichtung (6) und den Kühler (5) verlassenden Arbeitsgasleitung befindlichen Produktabscheider (7) für Reaktionsprodukte (F) und das Arbeitsgas (K),
- wobei der Reaktor (2), der Kühler (5) und die Scheidevorrichtung (6) nacheinander durch eine Kreislauffördereinrichtung (0,8) für den Adsorptionsstoff verbunden sind und
- der Kühler (5), die Scheidevorrichtung (6) sowie der Produktabscheider (7) mit einer Fördereinrichtung für Kühlgas (K) zur Rückführung des Kühlgases in die Zugabeeinrichtung (9) des Reaktors (2) für das zu behandelnde Gas versehen sind.

9. Vorrichtung nach Anspruch 8 dadurch gekennzeichnet, daß die Scheidevorrichtung (6) aus einer drehbaren, etwa horizontal angeordneten Trommel für den körnigen Adsorptionsstoff besteht und mit Zuführeinrichtungen für Wasser (D) und/oder Kühlgas (E) versehen ist.

10. Vorrichtung nach Anspruch 8 dadurch gekennzeichnet, daß außerhalb des Reaktors (2) eine Abrasionsvorrichtung für die Oberfläche des endlosen Bandregisters oder Scheibenregisters angeordnet ist.

## Claims

1. Method of treating gases, which contain non-metallic oxides and/or halogen halides, by employing the following method steps:
a) cooling the gas (A) to be treated and setting an absolute moisture content to substantially between 3 and 30 % by vol.;
b) admixing a working gas (K) and an alkaline reagent (C) to the gas (A) to be treated;
c) conducting the mixture formed from the gas (A), the working gas (K) and the reagent (C) in a reactor (2) over a large, cooled surface of a solid adsorption substance, which circulates through the reactor and has a temperature which is kept lower than the temperature of the gas mixture momentarily flowing around the adsorption substance, pollutant components or their preliminary reaction products being deposited on the relatively cold adsorption substance, being thereby cooled and being partially stabilised;
d) discharging the gas mixture, from which the pollutant components deposited on the adsorption substance are removed, from the reactor via a filter for separating solid particles;
e) cooling the adsorption substance by further stabilisation of the deposited reaction products by contact with cooling gas (E) and/or water (D) to at least below 70° C after removal of the charged, dry adsorption substance from the reactor;
f) releasing the deposited reaction products from the adsorption substance by oxidation and/or abrasion;
g) separating the adsorption substance from the mixture, which is produced during method steps e) and f), and returning such to the reactor;
h) separating the reaction product (F) and the abrasion of the adsorption substance from the air stream supplied as cooling gas (E), and use of the air stream as working gas (K) according to method step b).

2. Method according to claim 1, characterised in that the adsorption substance comprises granules having a granular size of between 0.1 and 5 mm, preferably between 1 and 3 mm.

3. Method according to claim 1, characterised in that portions of a surface of an endless tape recorder or of a disc recorder are used as the adsorption substance.

4. Method according to one of claims 1 to 3, characterised in that one or a plurality of the materials selected from the group of metals, metallic oxides, natural stone, slag from steel production, slag from coal combustion, ceramic materials, graphite or plastics material are used as the adsorption substance.

5. Method according to one of claims 1 to 4, characterised in that the adsorption substance has a harder surface than the surface of the reaction products (F).

6. Method according to one of claims 1 to 5, characterised in that the gas (A) is guided in the reactor (2) in counterflow or crosswise flow or in a combination of both with the adsorption substance.

7. Method according to one of claims 1 to 6, characterised in that reaction accelerators (G), such as oxidising agents and/or energy-rich rays, are supplied to the gas (A).

8. Apparatus for implementing the method according to one or more of claims 1 to 7, including a reactor (2) for treating gases, the supplying and discharging means for supplying and discharging the gas and an adsorption substance, as well as possibly a supplying means for supplying reaction accelerators, a preliminary cooler (1) and a supplying means for supplying an alkaline reagent being provided in the gas supply line, a filter (3) for filtering the treated gas, which is connected downstream of the reactor, and a cooler (5) for cooling the adsorption substance, characterised by
- a separator (6) for separating the adsorption substance, which is connected downstream of the cooler (5), and a working gas (K), which is produced in the cooler by the addition of a cooling gas (E);
- a product separator (7) for separating reaction products (F) and the working gas (K), which separator is situated in the working gas line leaving the separator (6) and the cooler (5);
- wherein the reactor (2), the cooler (5) and the separator (6) are connected in series with one another by a circulatory conveyor (0, 8) for the conveyance of the adsorption substance; and
- the cooler (5), the separator (6) and the product separator (7) are provided with a conveyor for conveying cooling gas (K) in order to return the cooling gas to the supplying means (9) of the reactor (2) for supplying the gas to be treated.

9. Apparatus according to claim 8, characterised in that the separator (6) comprises a rotatable, substantially horizontally disposed drum for the granular adsorption substance and is provided with supplying means for supplying water (D) and/or cooling gas (E).

10. Apparatus according to claim 8, characterised in that an abrasion device for abrading the surface of the endless tape recorder or disc recorder is disposed externally of the reactor (2).

## Revendications

1. Procédé de traitement de gaz, qui contiennent des oxydes non métalliques et/ou des halogénures d'hydrogène, avec utilisation des mesures de procédé suivantes :
(a) refroidissement du gaz (A) à traiter et réglage d'une teneur absolue en humidité à environ 3 à 30% en volume ;
(b) incorporation par mélange d'un gaz de travail (K) et d'un réactif alcalin (C) au gaz (A) à traiter ;
(c) acheminement du mélange du gaz (A), du gaz de travail (K) et du réactif (C) dans un réacteur (2) sur une surface refroidie importante d'un agent d'adsorption solide, recyclé à travers le réacteur, dont la température est maintenue inférieure à la température du mélange gazeux s'écoulant instantanément autour de l'agent d'adsorption, les composants polluants ou leurs précurseurs de réaction se fixent par addition sur l'agent d'adsorption relativement froid, ce par quoi ils se refroidissent et sont partiellement stabilisés ;
(d) extraction du mélange gazeux, duquel sont éliminés les composants polluants fixés par addition sur l'agent d'adsorption, hors du réacteur, pour le faire passer sur un filtre en vue de la séparation des particules solides ;
(e) refroidissement de l'agent d'adsorption avec nouvelle stabilisation des produits de réaction fixés par addition, par contact avec du gaz de refroidissement (E) et/ou de l'eau (D) à au moins au-dessous de 70°C après élimination de l'agent d'adsorption, sec, chargé, hors du réacteur ;
(f) détachement des produits de réaction fixés par addition, de l'agent d'adsorption, par oxydation et/ou abrasion mécanique ;
(g) séparation de l'agent d'adsorption du mélange formé pendant les étapes de procédé (e) et (f), et recyclage dans le réacteur ;
(h) séparation du produit de réaction (F) et du produit d'abrasion de l'agent d'adsorption à partir du courant d'air introduit en tant que gaz de refroidissement (E) et son utilisation comme gaz de travail (K) selon l'étape de procédé (b).

2. Procédé selon la revendication 1, caractérisé par le fait que l'agent d'adsorption se compose de grains ayant une grosseur de grain de 0,1 à 5 mm, de préférence, de 1 à 3 mm.

3. Procédé selon la revendication 1, caractérisé par le fait que, comme agent d'adsorption, on utilise des parties d'une surface d'un registre à bande sans fin ou d'un registre à disque.

4. Procédé selon l'une des revendications 1 à 3, caractérisé par le fait que, comme agent d'adsorption, on utilise un ou plusieurs des matériaux appartenant au groupe des métaux, des oxydes métalliques, de la roche naturelle, des scories de fabrication de l'acier, des scories de la combustion du charbon, des substances céramiques, du graphite ou des matières plastiques.

5. Procédé selon l'une des revendications 1 à 4, caractérisé par le fait que l'agent d'adsorption présente une surface plus dure que la surface des produits de réaction (F).

6. Procédé selon l'une des revendications 1 à 5, caractérisé par le fait que le gaz (A) est amené dans le réacteur (2) à contre-courant ou à jets croisés, ou suivant une combinaison des deux, avec l'agent d'adsorption.

7. Procédé selon l'une des revendications 1 à 6, caractérisé par le fait qu'au gaz (A), on ajoute un accélérateur de réaction (G) tel qu'un agent oxydant et/ou des rayons riches en énergie.

8. Appareillage pour la mise en oeuvre du procédé tel que défini à l'une ou plusieurs des revendications 1 à 7, comportant un réacteur (2) pour le traitement des gaz, qui comprend des dispositifs d'addition et d'extraction pour le gaz et un agent d'adsorption, ainsi que, le cas échéant, un dispositif d'addition pour un accélérateur de réaction, un dispositif de pré-refroidissement (1) et un dispositif d'addition pour un réactif alcalin étant prévus dans l'amenée de gaz (9), ledit appareillage comportant également un filtre (3) monté à la suite du réacteur pour le gaz traité et un dispositif de refroidissement (5) pour l'agent d'adsorption, caractérisé par :
- un dispositif de séparation (6), monté à la suite du dispositif de refroidissement (5), pour l'agent d'adsorption et un gaz de travail (K) se formant dans le dispositif de refroidissement par addition d'un gaz de refroidissement (E) ;
- un dispositif (7) de séparation des produits, se trouvant dans la conduite de sortie de travail quittant le dispositif de séparation (6) et le dispositif de refroidissement (5), pour les produits de réaction (F) et le gaz de travail (K) ;
- le réacteur (2), le dispositif de refroidissement (5) et le dispositif de séparation (6) étant reliés l'un à la suite de l'autre par un dispositif de transport de recyclage (0,8) pour l'agent d'adsorption ; et
- le dispositif de refroidissement (5), le dispositif de séparation (6) ainsi que le dispositif (7) de séparation des produits étant dotés d'un dispositif de transport pour le gaz de refroidissement (K) en vue du recyclage du gaz de refroidissement dans le dispositif d'addition (9) du réacteur (2) pour le gaz à traiter.

9. Appareillage selon la revendication 8, caractérisé par le fait que le dispositif de séparation (6) se compose d'un tambour tournant, disposé sensiblement horizontalement, pour l'agent d'adsorption en grains, et est doté de dispositifs d'amenée pour l'eau (D) et/ou le gaz de refroidissement (E).

10. Appareillage selon la revendication 8, caractérisé par le fait qu'à l'extérieur du réacteur (2), est installé un dispositif d'abrasion pour la surface du registre à bande sans fin ou du registre à disque.
